(19) Europäisches Patentamt
European Patent Office
Office européen des brevets

(11) Veröffentlichungsnummer: **0 539 368 B1**

(12) **EUROPÄISCHE PATENTSCHRIFT**

(45) Veröffentlichungstag der Patentschrift: **02.11.94**

(51) Int. Cl.⁵: **B29C 51/10**

(21) Anmeldenummer: **91902423.2**

(22) Anmeldetag: **29.01.91**

(86) Internationale Anmeldenummer:
**PCT/DE91/00083**

(87) Internationale Veröffentlichungsnummer:
**WO 92/01549 (06.02.92 92/04)**

(54) **VERFAHREN ZUR HERSTELLUNG EINER PLATTE MIT ZUMINDEST EINER NACH OBEN OFFENEN MULDE ZUR AUFNAHME VON CHEMISCHEN UND/ODER BIOCHEMISCHEN UND/ODER MIKROBIOLOGISCHEN SUBSTANZEN UND NACH DEM VERFAHREN HERGESTELLTE PLATTE.**

(30) Priorität: **18.07.90 DE 4022794**

(43) Veröffentlichungstag der Anmeldung:
**05.05.93 Patentblatt 93/18**

(45) Bekanntmachung des Hinweises auf die Patenterteilung:
**02.11.94 Patentblatt 94/44**

(84) Benannte Vertragsstaaten:
**AT CH DE FR GB IT LI NL**

(56) Entgegenhaltungen:
**CH-A- 275 726**
**DE-B- 1 251 010**
**FR-A- 1 431 684**
**US-A- 1 482 789**
**US-A- 3 007 206**

**Patent Abstracts of Japan, Vol. 13, No. 118 (M-806)(3466), 23 March 1989 & JP, A, 63293034 (TAKASHI MORI), 30 November 1988**

(73) Patentinhaber: **Max-Planck-Gesellschaft zur Förderung der Wissenschaften e.V.**
**Bunsenstrasse 10**
**D-37073 Göttingen (DE)**

(72) Erfinder: **EIGEN, Manfred**
**Dehio-Weg 14**
**D-3400 Göttingen (DE)**
Erfinder: **SIMM, Wolfgang**
**Bahnhofstrasse 3a**
**D-3405 Rosdorf 1 (DE)**

(74) Vertreter: **Witte, Alexander, Dr.-Ing. et al**
**Witte, Weller, Gahlert & Otten**
**Patentanwälte**
**Augustenstrasse 14**
**D-70178 Stuttgart (DE)**

## Beschreibung

Die Erfindung betrifft ein Verfahren zur Herstellung einer Platte mit zumindest einer nach oben offenen Mulde zur Aufnahme von chemischen und/oder biochemischen und/oder mikrobiologischen Substanzen, bei dem die Mulden mit einem Formwerkzeug in die Platte eingebracht werden, mit den Schritten:

a) Auflegen einer thermisch verformbaren Kunststofffolie auf einen als Formwerkzeug dienenden Formblock, der die Negativform zu bildenden Mulden aufweist; und

b) Beaufschlagen der Kunststofffolie mit einem heißen Medienstrom, der eine festgelegte erste Temperatur aufweist, wobei der heiße Medienstrom zumindest auf einen eine Vertiefung abdeckenden Bereich der Kunststofffolie trifft und diesen erweicht.

Ein Verfahren zur Herstellung von Platten mit nach oben offenen Mulden ist aus der US-PS-3 007 206 bekannt.

Das aus der US-PS-3 007 206 bekannte Verfahren dient zum Verformen von thermoplastischen Tafeln oder Platten. Das bekannte Verfahren findet insbesondere bei der Herstellung von durchsichtigen Plastikartikeln für Reklame- und Präsentationszwecke Verwendung. Zweck des Verfahrens ist es, die Ansehnlichkeit der Plastikartikel zu verbessern, indem Trübung und/oder Schleierbildung vermieden werden.

Bei den bekannten Verfahren werden die Kunststoffplatten luftdicht zwischen einem Formwerkzeug und einem Deckel eingespannt. In dem Formwerkzeug sind Vertiefungen vorgesehen, die die Negativform der zu bildenden Mulden aufweisen. Die Vertiefungen sind nach oben offen und weisen Be- und Entlüftungskanäle auf, die nach hinten aus dem Formwerkzeug herausführen.

Der Deckel ist in seinem Innenraum mit einer Düse versehen, die auf die eingespannte Kunststoffplatte gerichtet ist und dazu dient, wahlweise einen heißen oder einen kalten Ölstrahl auf die Kunststoffplatte zu sprühen. Außerdem sind in dem Deckel Einlaßöffnungen vorgesehen, die parallel zu der eingespannten Kunststoffplatte aufgerichtet sind und über die in dem Innenraum des Deckels ein Überdruck erzeugt werden kann.

Nach dem Einspannen wird die Kunststoffplatte als erstes durch einen von der Düse abgegebenen heißen Ölstrahl solange aufgeheizt, bis ein ebenfalls in dem Innenraum des Deckels angeordnetes Thermometer das Erreichen der erforderlichen Verformungstemperatur anzeigt. Das von der eingespannten Kunststoffplatte abtropfende oder ablaufende heiße Öl wird während dieser Aufheizphase über gesonderte Kanäle aus dem Innenraum abgeführt.

Nach dem Aufheizen wird der heiße Ölstrahl abgeschaltet und über die Einlaßöffnungen in dem Innenraum ein Überdruck erzeugt, um die Platte in die Vertiefung hineinzudrücken. Gleichzeitig wird über die Düse ein kalter Ölstrahl auf die Kunststoffplatte gerichtet, um diese abzukühlen. Das nun von der Kunststoffplatte abtropfende oder abfließende kalte Öl wird ebenfalls über gesonderte Kanäle aus dem Innenraum des Deckels abgeführt. Um während dieser Abkühlphase den Überdruck in dem Innenraum aufrecht zu erhalten, wird dieser über die Einlaßöffnungen laufend nachgeregelt.

Nach dem Abkühlen wird die fertige Kunststoffplatte aus der Vertiefung abgelöst, indem Luft durch die Entlüftungskanäle eingeblasen wird.

Wegen der vielen verschiedenen Verfahrensschritte, ist das bekannte Verfahren nicht für die Massenproduktion geeignet. Bei nach dem bekannten Verfahren hergestellten Kunststoffplatten ist es außerdem von Nachteil, daß sie aus dem Herstellungsprozeß ölverschmiert hervorgehen.

Insbesondere zur Herstellung von Platten mit nach oben offenen Mulden zur Aufnahme von chemischen und/oder biochemischen und/oder mikrobiologischen Substanzen ist dieses Verfahren ungeeignet, da die mit Öl verschmutzten Platten nach der Herstellung gründlich gereinigt werden müßten.

Derartige, jedoch nach einem anderen als dem eingangs genannten Verfahren hergestellte Platten, werden von mehreren Anbietern vertrieben und sind als Mikrotestplatten oder Mikrotiterplatten bekannt.

Die bekannten Platten bestehen aus Polystyrol oder Polyvinylchlorid und weisen einen steifen Boden auf, der von einem hochstehenden Rand allseits umgeben ist. In den über 1 mm dicken Boden sind von oben Mulden eingelassen, die in Reihen und Spalten angeordnet sind. Das Volumen der Mulden liegt in der Regel zwischen einigen hundert Mikrolitern und einigen Millilitern.

Es ist bekannt, den Rand der Platte mit einem Deckel abzudecken, um die Mulden und den von dem Rand begrenzten Innenraum vor dem Eintrag von Verschmutzungen jeder Art zu schützen.

Die Platten werden dazu verwendet, Lösungen oder Substanzen auf konstanter Temperatur zu halten. Dies geschieht entweder zu Lagerungszwecken, bspw. in einem Kühlschrank, oder um eine Reaktion bei einer bestimmten Temperatur ablaufen zu lassen. Für das letztere werden die Platten in einen Brutschrank gelegt, der in der Regel auf 37 °C eingestellt ist.

Für viele der neueren chemischen, biochemischen oder mikrobiologischen Methoden sind die bekannten Platten jedoch ungeeignet. Diese Methoden erfordern es, die Reaktionslösungen im Laufe des Versuchsablaufes auf verschiedene Temperaturen zu bringen, die von weit unter 0 °C bis über 110°C reichen können. Die Reaktionen müssen oft ein bestimmtes Temperaturprofil, das aus mehreren Aufheizungen und/oder Abkühlungen bestehen kann, zyklisch durchlaufen. Die Ausbeute und die Effizienz der Reaktionen hängt dabei wesentlich von der Geschwindigkeit des Temperaturwechsels in den verwendeten Lösungen ab. Insbesondere bei enzymatischen Vorgängen im Zusammenhang mit Untersuchungen an Nukleinsäuren ist ein schneller Wechsel zwischen hohen Temperaturen zum Aufschmelzen von Doppelsträngen und niedrigeren Temperaturen zum Starten der Reaktion erforderlich.

Einige dieser neuen Methoden haben sich zu Standardverfahren entwickelt, bei denen immer wiederkehrend eine große Anzahl von Proben dem gleichen Verfahrensablauf unterzogen werden. So werden bspw. beim Aids-Test viele Blutproben gleichzeitig untersucht, um möglichst schnell eine große Anzahl von Ergebnissen vorliegen zu haben.

Die bekannten Platten werden zwar mit bis zu 96 Mulden angeboten, diese Zahl ist jedoch für das anstehende Testaufkommen viel zu gering. Darüberhinaus sind die bekannten Platten für häufigen und schnellen Temperaturwechsel nicht geeignet, da das Abkühlen in einem Kühlschrank bzw. das Aufheizen in einem Brutschrank viel zu lange dauert.

Es ist zwar bekannt, die Platten über ihre ebene Unterseite zu thermostatieren, aber auch hierbei dauert der Temperaturwechsel der Proben mit bis zu mehreren Minuten viel zu lange.

Weiterhin sind konisch spitz zulaufende Plastik-Reaktionsgefäße mit einem Schnapp- oder einem Schraubdeckel bekannt. Diese Reaktionsgefäße sind in der Regel mehrere Zentimeter hoch und weisen einen Außendurchmesser im Bereich von 10 bis 18 mm auf. Die aufgenommenen Lösungen werden umtemperiert, indem die Reaktionsgefäße über ihre Außenseite thermostatiert werden. Dies geschieht z.B. durch Eintauchen der Reaktionsgefäße in Wasserbäder. Es ist aber auch bekannt, thermostatierte Metallblöcke mit Bohrungen für die Reaktionsgefäße zu versehen, die dann durch den Kontakt mit den Bohrungswänden thermostatiert werden. Der Wärmeübergang kann dabei durch Füllen der Bohrungen mit Wasser oder Öl verbessert werden.

Der Temperaturwechsel der Proben wird am schnellsten dadurch erreicht, daß die Reaktionsgefäße in andere Wasserbäder bzw. Metallblöcke gesteckt werden, die auf die neue, jeweils gewünschte Temperatur eingestellt sind. Wegen der dicken Wand der Plastik-Reaktionsgefäße nehmen die Lösungen die neue Temperatur jedoch nur sehr langsam an.

Aus diesem Grund sind die bekannten Reaktionsgefäße für die ein schnelles Umtemperieren erfordernden Methoden nicht geeignet. Darüberhinaus ist bei einer großen Anzahl von zu bearbeitenden Proben der Platzbedarf der bekannten Plastik-Reaktionsgefäße groß. Weiterhin ist von Nachteil, daß zumindest bei der Versuchsvorbereitung entsprechend viele Deckel geöffnet und wieder geschlossen werden müssen, was sehr zeitaufwendig ist.

Diese Platten werden, wie oben beschrieben, zur Lagerung der Substanzen oder zur Durchführung von Versuchen mit diesen Substanzen verwendet, wobei eine Kontamination mit Fremdkörpern jeder Art - also auch mit Öl - vermieden werden muß, so daß derartige Platten nach dem aus der US-PS-3 007 206 bekannten Verfahren nicht hergestellt werden können.

Die gründliche Reinigung von ölverschmutzten Kunststoffplatten ist insbesondere dann sehr aufwendig und oft gar nicht möglich, wenn die Platten Vertiefungen mit kleinen Volumina aufweisen. Für die Durchführung der oben genannten Versuche werden jedoch auch Platten benötigt, in denen Mulden mit kleinsten Volumina von 100 ul und weniger benötigt werden.

Unabhängig von der erforderlichen Reinigung lassen sich solche Platten mit kleinen Muldenvolumina insbesondere dann nicht herstellen, wenn die Platten aus dünnen Kunststoffolien gefertigt werden sollen. Wenn die auf Verformungstemperatur erhitzte dünne Kunststoffolie, nämlich gleichzeitig sowohl einem hohen Druck zur Verformung als auch einem kalten Ölstrahl zur Abkühlung ausgesetzt wird, kann die Folie über den Vertiefungen einreißen, so daß die entstehenden Mulden undicht sind und damit die gesamte Platte nicht verwendet werden kann.

Außerdem ist es bekannt, bei einem Tiefzieh-Verfahren eine steife Kunststoffplatte zu erhitzen, mit einem Formwerkzeug in Kontakt zu bringen und durch Unter- bzw. Überdruck an die Negativ- oder Positivform des Formwerkzeuges anzupassen. Zur Erzeugung von Mulden mit kleinem Volumen ist dieses Verfahren jedoch ebenfalls nicht geeignet, da die in diesem Falle zu verwendenden dünnen Kunststoffolien häufig reißen und sich außerdem in den kleinen Mulden keine glatten Oberflächen erzeugen lassen. Hierdurch wird die Geschwindigkeit des Temperaturwechsels negativ beeinflußt.

Der Erfindung liegt daher die Aufgabe zugrunde, das eingangs genannte Verfahren dahingehend weiterzubilden, daß es möglich ist, die Platten nach einem schnellen und einfachen Verfahren herzustellen, bei dem die Platten nach der Fertigstellung ohne weitere Reinigungsschritte verwendet werden können. Weiterhin soll es möglich werden, eine derartige Platte herzustellen, in der eine große Anzahl von Mulden auch mit kleinen Volumina vorgesehen sind. Die in den Mulden aufzunehmenden Reaktionslösungen sollen sich außerdem bei einfacher Handhabung schnell umtemperieren lassen.

Diese Aufgabe wird erfindungsgemäß dadurch gelöst, daß als Medienstrom ein Gasstrom verwendet wird, mit dem die Kunststoffolie für eine festgelegte Zeitspanne beaufschlagt wird, wobei der Gasstrom den der Vertiefung zugeordneten Bereich der Kunststoffolie erweicht und zusätzlich so in die Vertiefung hineindrückt, daß er sich vollflächig an deren durchgehend glatten Innenwand anschmiegt.

Die der Erfindung zugrundeliegende Aufgabe wird auf diese Weise vollkommen gelöst. Bei dem neuen Verfahren dient der heiße Gasstrom nämlich sowohl zum Erhitzen als auch zum Verformen der Kunststoffolie. Es ist kein zusätzliches Medium zum Erhitzen oder zum Abkühlen der Kunststoffolie erforderlich. Darüberhinaus wird die Kunststoffolie lediglich für eine festgelegte Zeitspanne mit einem heißen Gasstrom beaufschlagt, so daß es nicht mehr erforderlich ist, zu messen, ob die Verformungstemperatur erreicht wurde. Das neue Verfahren ist deshalb einfach und vor allem schnell durchzuführen.

Außerdem sind die fertiggestellten Platten nicht mit Fremdstoffen kontaminiert, so daß ein Reinigungsschritt entfällt und die Platten zur Aufnahme von chemischen, biochemischen sowie mikrobiologischen Substanzen geeignet sind.

Mit dem neuen Verfahren werden sauber ausgeformte Mulden ausgebildet, die eine nach unten unter die Folie vorstehende Ausstülpung mit einer großen Wärmeaustauschfläche aufweisen. Die Wandstärke der Mulden ist dabei geringer als die ursprünglich Stärke der Kunststoffolie. Wegen der geringen Wandstärke und der großen Wärmeaustauschfläche ist durch die Wand der Mulden ein schneller Wärmeaustausch möglich. Wenn die Wärmeaustauschfläche der Mulden mit einem Temperierstoff in Kontakt gebracht wird, der eine andere Temperatur aufweist als die in den Mulden aufgenommenen Lösungen, nehmen diese die neue Temperatur innerhalb weniger Sekunden an.

Darüberhinaus können mit dem neuen Verfahren in einer steifen aber dünnen Kunststoffolie sehr viele Mulden ausgebildet werden. Es ist möglich, bis zu tausend Mulden in einer Platte anzuordnen, die an ihrer Unterseite gleichzeitig - bspw. durch ein Wasserbad - umtemperiert werden. Durch die deshalb mögliche parallele Bearbeitung vieler Proben wird die Verfahrensökonomie der verwendeten bspw. chemischen Methode deutlich gesteigert.

Bei einer bevorzugten Weiterbildung des neuen Verfahrens wird der Formblock auf einer festgelegten zweiten Temperatur gehalten, die unterhalb der festgelegten ersten Temperatur aber oberhalb der Raumtemperatur liegt.

Diese Maßnahme hat den überraschenden Vorteil, daß die Außenseiten der Mulden sehr glatt werden, da die Luft bei der Fertigung ohne Blasenbildung entweicht. Diese glatten Außenwände lassen sich problemlos mit entsprechend geformten Löchern bspw. in Metallblöcken in Eingriff bringen, ohne daß auch nur dünne Luftschichten den Wärmeübergang zwischen dem Metallblock und der Wand der Mulde stören. Es ist daher möglich, die nach dem neuen Verfahren hergestellten Platten mit Hilfe von Metallblockthermostaten sehr schnell umzutemperieren. Außerdem sorgen die Metallblöcke für eine gute mechanische Stabilität der aufgelegten Platten.

Ein weiterer Vorteil wird bei diesem Verfahren dadurch erreicht, daß der heiße Gasstrom von einer Düse abgegeben wird, deren Austrittsöffnung während der festgelegten Zeitdauer in einem festgelegten Abstand zu der Kunststoffolie gehalten wird.

Durch diese Maßnahme ist es möglich, mit dem neuen Verfahren auch sehr dünne Kunststoffolien zu verarbeiten, ohne daß die eingeschlossene Luft das Ausformen der Mulden behindert. Die so erzeugten Platten haben eine sehr dünne Wandstärke, so daß der Wärmeübergang nochmals verbessert ist.

Weiterhin ist es vorteilhaft, wenn die im Querschnitt runden Mulden ein Volumen, kleiner als 200 Mikroliter, und einen Durchmesser, kleiner als 10 mm, aufweisen, wenn die Austrittsöffnung der Düse einen Durchmesser aufweist, der ca. genauso groß ist wie der Durchmesser der Mulden, und wenn der festgelegte Abstand etwa dem Durchmesser der Mulden entspricht.

Diese Maßnahme hat den Vorteil, daß auch bei sehr kleinen Volumina glatte Außenflächen und reproduzierbare Mulden erzeugt werden.

Weiterhin ist es vorteilhaft, wenn die Kunststoffolie eine Polycarbonatfolie von einer Stärke geringer als 0,5 mm ist, wenn die festgelegte erste Temperatur zwischen 250°C und 300°C und die festgelegte zweite Temperatur zwischen 90°C und 110°C liegt.

Durch diese Maßnahmen wird es möglich, mit dem neuen Verfahren Mulden zu erzeugen, deren Wandstärken unter 0,1 mm liegen, so daß ein sehr guter Wärmedurchgang gewährleistet ist. Im Vergleich zu den bekannten Platten und den bekannten Plastik-Reaktionsgefäßen benötigen die nach diesem neuen Verfahren hergestellten Platten bei erheblich größerer Muldenzahl deutlich weniger Platz. Darüberhinaus wird erheblich weniger Material benötigt, um die neuen Platten zu fertigen, so daß sie als preiswerte Wegwerfartikel konzipiert werden können.

Bei einer nach dem neuen Verfahren hergestellten Platte weist die Mulde einen Wärmedurchtrittswert auf, der größer als $5 \times 10^{-4}$ W/(K mm$^3$)

ist und für den die formelmäßige Beziehung W = (A . λ)/(V . x) gilt, in der A die Größe der Wärmeaustauschfläche, λ die Wärmeleitfähigkeit des die Wand bildenden Materials, V das Volumen der Mulde, x die als Abstand zwischen der Wärmeaustauschfläche und der Innenfläche gemessene Wandstärke der Mulde und W der Wärmedurchtrittswert ist.

Bei einem derartigen Wärmedurchtrittswert ist ein schneller Wärmetransport durch die Wand in die Mulde hinein, bzw. aus der Mulde heraus, möglich.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:

Fig. 1     die erfindungsgemäße Platte mit den nach oben offenen Mulden, im Ausschnitt und in einer perspektivischen Darstellung;

Fig. 2     die Platte aus Fig. 1, in einer Schnittdarstellung entlang der Linie II-II aus Fig. 1;

Fig. 3     ein Verfahren zur Herstellung der Platte aus Fig. 1, in einer schematischen Darstellung;

Fig. 4     die Abdeckung einer Platte nach Fig. 1 mit einer Abdeckfolie, im Ausschnitt und in einer perspektivischen Darstellung;

Fig. 5     die abgedeckte Platte aus Fig. 4, mit ringförmigen Verbindungsnähten, die um die Mulden herumgelegt sind und die Abdeckfolie mit der Platte verbinden, in der Ansicht des Pfeiles V aus Fig. 4;

Fig. 6     einen Schweißstempel zum Erzeugen der Verbindungsnähte aus Fig. 5, in einer geschnittenen Teilansicht;

Fig. 7     den Schweißstempel aus Fig. 6, in einer Teilansicht von oben entlang des Pfeiles VII aus Fig. 6;

Fig. 8     die Verbindungsnaht aus Fig. 5, in einer geschnittenen Seitenansicht entlang der Linie VIII-VIII aus Fig. 5;

Fig. 9     eine Vorrichtung zum Verschweißen der abgedeckten Platte aus Fig. 4, in der mehrere der Schweißstempel aus Fig. 6 verwendet werden, in einer perspektivischen Darstellung; und

Fig. 10    die Verwendung der verschweißten Platte aus Fig. 5 in Zusammenhang mit einem Thermoblock, in einer perspektivischen Darstellung und im Ausschnitt.

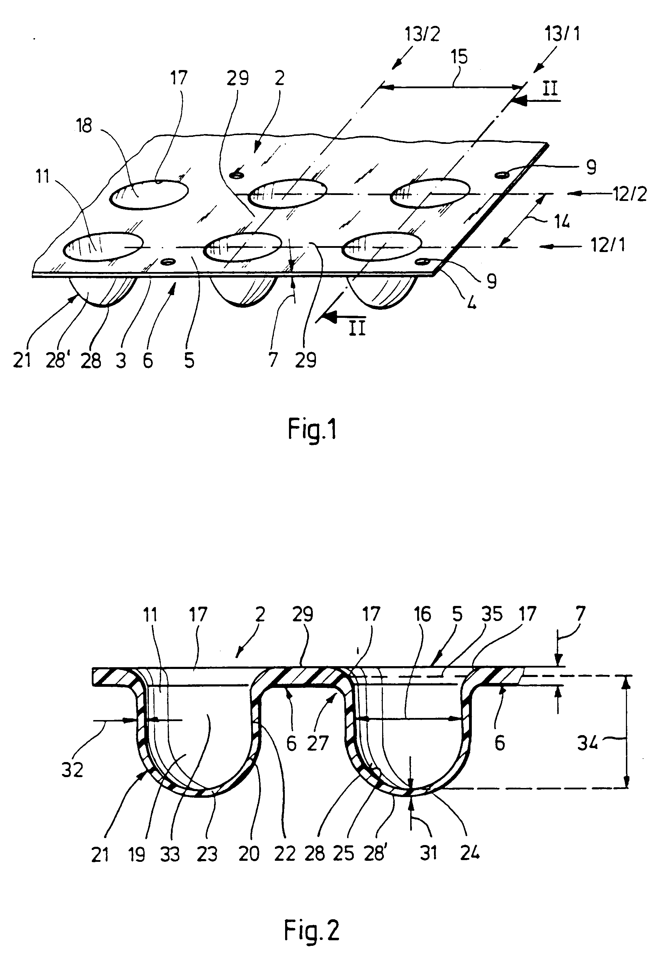

In Fig. 1 ist im Ausschnitt eine rechteckige flexible Platte 2 mit einer ihrer Längskanten 3 sowie einer ihrer Seitenkanten 4 gezeigt. Die bspw. aus einer steifen Kunststoffolie gefertigte Platte 2 weist eine ebene Oberseite 5 und eine dazu parallele Unterseite 6 auf. Ihre zwischen der Oberseite 5 und der Unterseite 6 gemessene Stärke ist bei 7 angedeutet. Wie in Fig. 1 zu erkennen, ist die Stärke 7 klein gegenüber den Querabmaßen der Platte 2.

In der Platte 2 sind Durchgangslöcher 9 vorgesehen und nach oben offene Mulden 11 ausgebildet. Die Mulden 11 sind in Reihen 12 und Spalten 13 angeordnet, wobei die Reihen 12 parallel zu der Längskante 3 und die Spalten 13 parallel zu der Seitenkante 4 verlaufen. Die Reihen 12 bzw. Spalten 13 haben untereinander je einen bei 14 bzw. 15 angedeuteten Reihen- bzw. Spaltenabstand. In dem gezeigten Ausführungsbeispiel weisen die im Querschnitt kreisförmigen Mulden 11 einen in Fig. 2 besser zu erkennenden Innendurchmesser 16 auf. Die Reihenabstände 14 und die Spaltenabstände 15 sind gleich groß, wobei der Innendurchmesser 16 der Mulden 11 selbstverständlich kleiner ist als der Reihenabstand 14 bzw. der Spaltenabstand 15.

Die Mulden 11 liegen mit ihren von einem abgerundeten Öffnungsrand 17 umgebenen Öffnungen 18 in der Ebene der Oberseite 5 der Platte 2. Sie weisen eine ihren Innenraum 19 begrenzende Wandung 20 auf, die in der Art einer becherartigen Ausstülpung 21 ausgebildet ist und bei jeder der untereinander identischen Mulden 11 unterhalb der Unterseite 6 der Platte 2 liegt.

Im weiteren Verlauf der Beschreibung ist mit "nach oben" die Richtung aus dem Innenraum 19 der Mulden 11 durch die Öffnung 18 hinaus bezeichnet und mit "nach unten" dementsprechend die entgegengesetzte Richtung.

Wie besser in Fig. 2 zu erkennen ist, weist die Ausstülpung 21 einen hohlzylindrischen oberen Abschnitt 22 sowie einen damit einstückigen halbkugelförmigen unteren Abschnitt 23 auf, dessen gewölbte Bodenwand 24 die Mulde 11 nach unten abschließt. Die Oberseite 5 geht unter Ausbildung der umlaufenden abgerundeten Kante 17 unmittelbar als Innenfläche 25 in den Innenraum 19 der Mulde 11 über, wobei die Unterseite 6 unter Ausbildung einer um die Ausstülpung 21 umlaufenden Kehlnut 27 als Außenseite 28 der Ausstülpung 21 im wesentlichen parallel zu der gewölbten Innenfläche 25 verläuft. Zwischen den einzelnen Mulden 11 verlaufen Stege 29, die die einzelnen Öffnungen 18 voneinander trennen.

Wie in Fig. 2 weiter zu erkennen ist, weist die Bodenwand 24 eine bei 31 angedeutete Stärke auf, die zwischen der Innenfläche 25 und der Außenseite 28 gemessen ist. Im Bereich des hohlzylindrischen oberen Abschnittes 22 ist eine entsprechend gemessene Stärke bei 32 angedeutet, die ungefähr der Stärke 31 entspricht. Die Mulden 11 weisen je ein Volumen 33 auf, das im wesentlichen von ihrer bei 34 angedeuteten Tiefe sowie dem Innendurchmesser 16 bestimmt ist. Die Tiefe 34 ist zwischen der Bodenwand 24 und einer bei 35 durch eine gestrichelte Linie angedeuteten gedachten maximalen Füllhöhe gemessen. Die Füllhöhe 35 befindet sich etwa auf der Höhe, auf der der gewölbte Öffnungsrand 17 in die senkrechte Innenfläche 25 übergeht. Wegen der Oberflächenspannung und der damit verbundenen Vorkrümmung wird insbesondere bei kleinen Volumina 33 das Füllvolumen der aufzunehmenden Substanzen kleiner sein als das maximale Volumen 33.

Die Mulden 11 der insoweit beschriebenen Platte 2 dienen zur Aufnahme von chemischen und/oder biochemischen und/oder mikrobiologischen Substanzen, die in den Mulden 11 gelagert oder einer Reaktion unterzogen werden. Das Volumen 33 und die Anzahl der Mulden 11 pro Platte 2 hängen dabei von den von den Mulden 11 aufzunehmenden Substanzen ab. Über das Volumen 33 sind neben dem Innendurchmesser 16 und der Tiefe 34 auch der Reihenabstand 14 und der Spaltenabstand 15 weitgehend festgelegt. Die Stärke 7 der Platte 2 im Bereich der Stege 29 ist so gewählt, daß die Platte 2 trotz der dicht zusammenliegenden Mulden 11 eine ausreichende Festigkeit aufweist und beim Transportieren mit gefüllten Mulden 11 nicht durchknickt. Die Stärken 31 und 32 der Wandung 20 der Mulden 11 sind unter mechanischen Gesichtspunkten so gewählt, daß die gefüllten Mulden 11 unter dem Gewicht der aufgenommenen Substanzen nicht einreißen oder gar abreißen.

Neben dem rein mechanischen Gesichtspunkt sind das Material, aus dem die Platte 2 gefertigt ist, und die Stärken 31 bzw 32 der Wandung 20 auch unter physikalischen Gesichtspunkten ausgewählt. Die Stärken 31 und 32, die - wie in Fig. 2 zu erkennen - deutlich geringer sind als die Stärke 7, ermöglichen einen guten Wärmetransport in den Innenraum 19 der Mulden 11 hinein bzw. aus dem Innenraum 19 heraus. Dadurch ist es möglich, die Substanzen in den Mulden sehr schnell abzukühlen bzw. umzutemperieren, indem die ganze Außenseite 28 als Wärmeaustauschfläche 28' mit einem Temperierstoff der jeweils gewünschten Temperatur in Kontakt gebracht wird.

In dem gewählten Ausführungsbeispiel ist die Platte 2 aus Polycarbonat gefertigt und weist eine Wärmeleitfähigkeit von λ = 0,21 W pro Kelvin und Meter auf. Die Stärke 7 beträgt ca. 0,27 mm und für die Stärke 31 gilt: x = 0,04 mm. Die Abstände 14 bzw. 15 zwischen den Reihen 12 bzw. den Spalten 13 betragen etwa 10 mm und das Volumen 33 der Mulden 11 liegt bei: V = 85 $\mu$l. Die Größe der Wärmeaustauschfläche 28' entspricht der Außenseite 28 und beträgt: A = 75 mm$^2$. Gemäß der Formel

$$W \;=\; \frac{A \cdot \lambda}{V \cdot x}$$

ergibt sich mit diesen Zahlenwerten ein Wärmedurchtrittswert von ca. 4,5 x 10$^{-3}$ W/(K mm$^3$).

Es hat sich gezeigt, daß für einen solchen Wärmedurchtrittswert der Wärmeaustausch durch die Wandung 20 so schnell erfolgt, daß der bestimmende Zeitfaktor die Wärmeleitung in den Substanzen selbst ist.

Damit ermöglicht es die neue Platte 2 z.B., auf kleinem Raum eine große Anzahl von Reaktionen in getrennten Mulden 11 durchzuführen, wobei sich die Reaktionen durch die Wandung 20 der Mulden hindurch thermisch sehr gut steuern lassen.

Darüberhinaus ist das Material der Platte 2 so gewählt, daß durch die Wandung 20 der Mulden 11 hindurch optische Analyseverfahren, wie z.B. Absorptionsmessungen oder Fluoreszenzmessungen möglich sind. Das Material muß zu diesem Zweck in dem interessierenden Lichtwellenlängenbereich durchsichtig sein, d.h. es darf in diesem Wellenlängenbereich weder nennenswerte Absorption noch Fluoreszenzemission aufweisen.

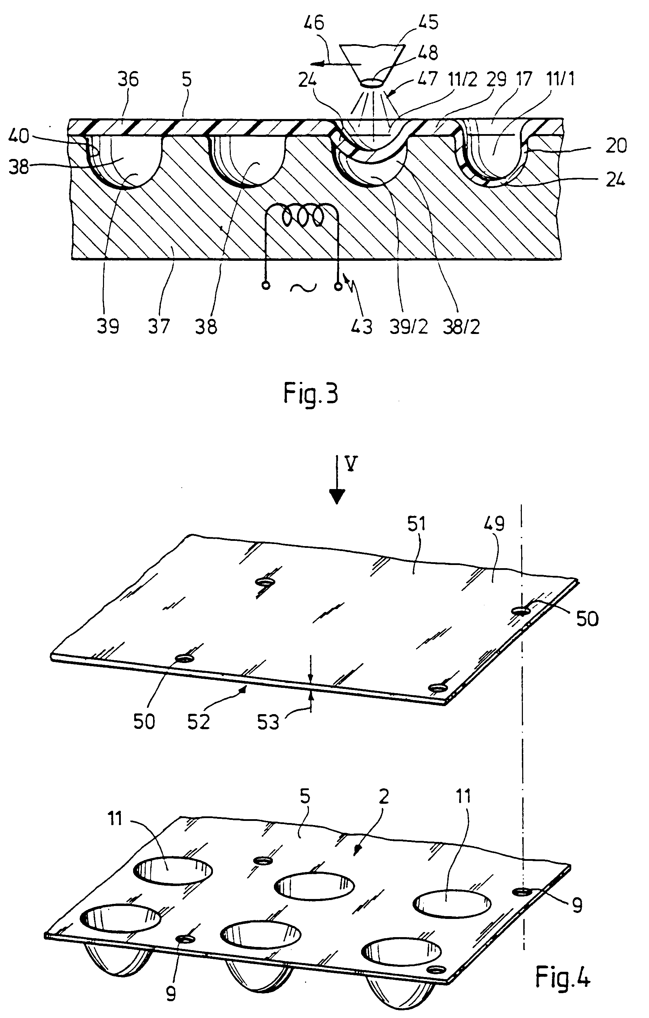

Anhand von Fig. 3 soll jetzt ein Verfahren zur Herstellung der Platte 2 aus Fig. 1 beschrieben werden. Das Ausgangsmaterial ist eine dünne Folie 36, bspw. aus einem Polycarbonat, mit der Stärke 7. Diese Folie 36 wird auf einen temperierten Formblock 37 gelegt, in dem nach oben offene Sacklöcher 38 vorgesehen sind, die wie die Mulden 11 in Reihen 12 und Spalten 13 angeordnet sind. Die Sacklöcher 38 weisen eine ihr Inneres 39 umgebende Wandfläche 40 auf, die glatt und in sich geschlossen ist. Die Abmaße der Sacklöcher 38 sind so gewählt, daß sie den Außenabmaßen der zu bildenden Ausstülpungen 21 entsprechen, in dem gewählten Beispiel weisen die Sacklöcher einen Durchmesser von ca. 6 mm und eine Tiefe von ca. 4 mm auf.

In dem aus Metall, bspw. aus Aluminium, gefertigten Formblock 37 ist eine bei 43 schematisch angedeutete Heizung vorgesehen, durch die der Formblock 37 gleichmäßig auf 100 °C aufgeheizt wird. In Richtung der Sacklöcher 38 ist oberhalb des Formblockes 37 eine Luftdüse 45 angeordnet, die in Richtung des Pfeiles 46 bewegbar ist. Die Richtung 46 verläuft parallel zu den Spalten 13 bzw. den Reihen 12, so daß die Luftdüse 45 über jedem einzelnen Sackloch 38 mittig positionierbar ist. Die Richtung 46 ist außerdem parallel zu der Oberseite 5 der auf den Formblock 37 aufgelegten Folie 36 ausgerichtet, so daß der Abstand zwischen der Luftdüse und der Oberseite 5 konstant bleibt.

Die Luftdüse 45 gibt einen ca. 280°C heißen Heißluftstrahl 47 ab, der mit einer Geschwindigkeit von ca. 2 - 5 m/sec aus ihrer Austrittsöffnung 48 in etwa senkrecht zu dem Formblock 37 nach unten austritt. Die Austrittsöffnung 48 hat einen Durchmesser von etwa 5 mm und befindet sich 4 mm oberhalb der Oberseite 5 der Folie 36. Die Luftdüse 45 wird nacheinander mittig über den einzelnen Sacklöchern 38 positioniert, wo sie etwa 3 bis 5 Sekunden stehen bleibt. Durch den auf die Oberseite 5 auftreffenden Heißluftstrahl 47 wird die Folie 36 so weit erwärmt, daß sie plastisch verformbar ist.

Der Heißluftstrahl 47 bläst dann den ursprünglich oberhalb des Sackloches 38 liegenden Bereich der Folie 36 in das Innere 39 des jeweiligen Sackloches hinein, wobei dieser sich allmählich streckt und die ursprüngliche Stärke 7 der Folie 36 sich in diesem Bereich immer weiter verringert, bis schließlich die Wandung 20 der entstandenen Mulde 11 die in Fig. 2 angedeuteten Stärken 31 bzw. 32 aufweist.

In Fig. 3 ist die rechte Mulde 11/1 bereits fertig ausgebildet, und die Luftdüse 45 befindet sich oberhalb des Sackloches 38/2, in dem gerade die Mulde 11/2 ausgebildet wird. Der Boden 24 der Mulde 11/2 hat sich bereits teilweise in das Innere 39/2 der Sackloches 38/2 hineinbewegt und wird sich im weiteren vollflächig an die glatte Innenwand des Sackloches 38/2 anlegen. Wie in Fig. 3 zu erkennen, bleibt zwischen den Mulden 11/1 und 11/2 der Steg 29 in der ursprünglichen Stärke 7 der Folie 36 stehen. Beim Ausformen der Mulden 11 entweicht die eingeschlossene Luft ohne Blasenbildung.

Selbstverständlich ist es möglich, statt einer Luftdüse 45 mehrere parallele Luftdüsen 45 zu verwenden, deren Austrittsöffnungen 48 im Rastermaß der Spalten 13 bzw. der Reihen 12 angeordnet sind. Auf diese Weise lassen sich je nach Anzahl der Luftdüsen 45 alle Mulden 11 einer Reihe 12 oder auch einer Spalte 13 gleichzeitig herstellen.

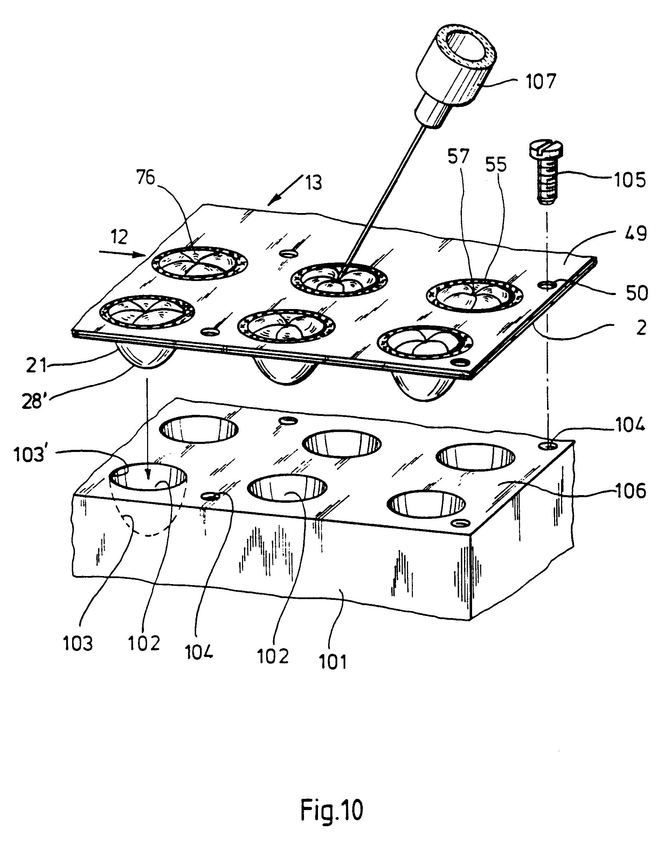

Wie bereits oben beschrieben, besteht die Folie 36 aus einem Polycarbonat der Stärke 0,27 mm. Vor dem Ausformen der Mulden 11 ist die Folie 36 milchig trüb. Es hat sich jedoch gezeigt, daß die Folie 36 bei einer Temperatur des Heißluftstrahles 47 von 280°C und bei einer Temperatur des Formblockes 37 von 100°C im Bereich der Wandung 20 der ausgeformten Mulden 11 durchsichtig wird, wie es für die o.g. optischen Analysemethoden erforderlich ist. Das für das eigentliche Ausformen der Mulden 11 nicht erforderliche Temperieren des Formblockes 37 auf 100°C bewirkt weiterhin, daß die Außenseite 28 der Mulde 11 sich satt an die Wandfläche 40 des jeweiligen Sackloches 38 anlegt. Dadurch wird erreicht, daß die Außenseite 28 einer jeden Mulde 11 ebenfalls eine glatte und gleichmäßige Oberfläche aufweist, was für das Umtemperieren von in den Mulden 11 aufgenommenen Substanzen von großem Vorteil ist. Die Ausstülpungen 21 weisen nämlich nahezu identische Konturen auf, so daß sie mit ihrer Wärmeaustauschfläche 28' ohne den thermischen Übergang störende Luftschichten in unmittelbaren Kontakt mit entsprechend den Sacklochbohrungen 38 ausgebildeten Gegenflächen gebracht werden können. Dies wird weiter unten noch anhand von Fig. 10 beschrieben.

Insbesondere wenn das Volumen 33 der Mulden 11 gering ist, sollten die Mulden 11 gegenüber der Außenatmosphäre abgeschlossen werden. Zu diesem Zweck ist eine in Fig. 4 dargestellte Abdeckplatte vorgesehen, die aus einer dünnen Abdeckfolie 49 besteht. In der Abdeckfolie 49 sind Durchgangslöcher 50 vorgesehen, die in demselben Rastermaß angeordnet sind, wie die Durchgangslöcher 9 in der Platte 2. Die Abdeckfolie 49 weist eine ebene Oberseite 51 und eine dazu parallele Unterseite 52 auf, mit der sie beim Abdecken der Platte 2 auf deren Oberseite 5 zu liegen kommt. Die Abdeckfolie 49 hat eine zwischen der Oberseite 51 und der Unterseite 52 gemessene Stärke 53, die klein gegenüber den Querabmaßen der Abdeckfolie 49 ist. Die Abdeckfolie 49 ist bespw. aus einem Polycarbonat der Stärke 0,1 mm gefertigt.

Beim Auflegen auf die Platte 2 wird die Abdeckfolie 49 so ausgerichtet, daß die Durchgangslöcher 50 mit den Durchgangslöchern 9 fluchten. Auf diese Weise können die Abdeckfolie 49 und die Platte 2 in noch näher zu beschreibender Weise gleichzeitig miteinander verbunden und auf einer Trageeinrichtung befestigt werden.

Selbstverständlich können statt der Durchgangslöcher 50 bzw. der Durchgangslöcher 9 nach unten bzw. nach oben vorstehende zylindrische Zapfen vorgesehen sein, die beim Auflegen der Abdeckfolie 49 auf die Platte 2 in die Durchgangslöcher 9 bzw. die Durchgangslöcher 50 eingreifen und so die Abdeckfolie 49 lösbar mit der Platte 2 verbinden.

Das vorzugsweise verwendete Material für die Abdeckfolie 49 ist, wie bereits erwähnt, ein Polycarbonat der Stärke 0,1 mm. Diese Folie ist im für die verwendeten optischen Analysemethoden interessierenden Wellenlängenbereich durchsichtig und weist nur geringe Eigenfluoreszenz auf. Die optischen Analysemethoden können so auch von oben durch die Abdeckfolie 49 hindurch angewandt werden, insbesondere ist es möglich, im Durchstrahlverfahren durch die Abdeckfolie 49 und die Bodenwand 24 der Mulden hindurch die optische Dichte der in den Mulden 11 aufgenommenen Substanzen zu messen.

Bei den bevorzugten kleinen Volumina 33 der Mulden 11, die im Bereich zwischen 30 und 100 µl liegen, kann sich das Volumen von in den Mulden 11 aufgenommenen Lösungen durch Kondensations- und/oder Verdunstungseffekte verändern. Dies gilt insbesondere, wenn ein häufiges Umtemperieren der Lösungen zwischen hohen und tiefen Temperaturen erforderlich ist, wie es bei der Polymerase-Kettenreaktion (PCR) auftritt, einem häufig angewandten Verfahren zur Hochverstärkung einzelner Nukleinsäure-Stränge.

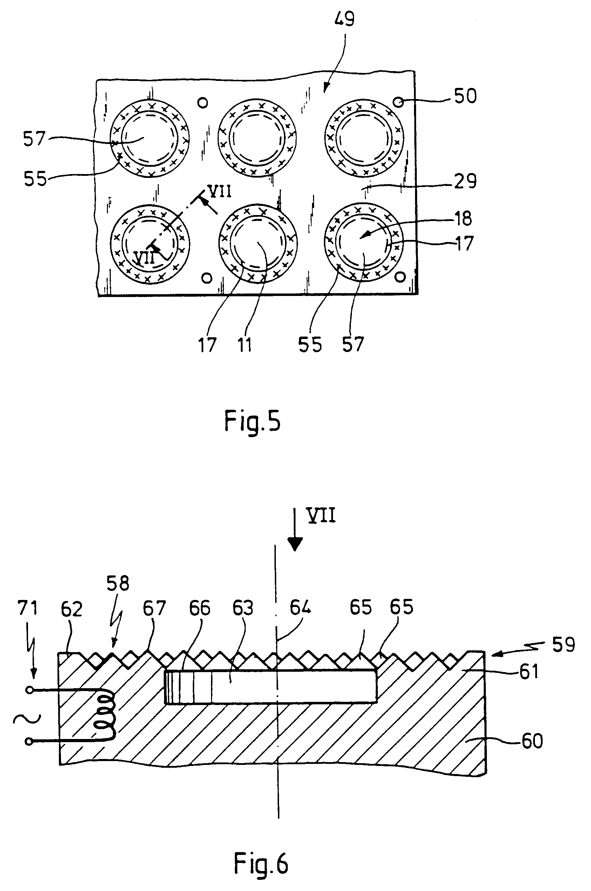

Um die Dichtwirkung der Abdeckfolie 49 zu erhöhen, wird die Abdeckfolie 49 im Bereich einer jeden Mulde 11 durch eine, den Öffnungsrand 17 der Mulde umgebende, geschlossene ringförmige Verbindungsnaht 55 mit der Platte 2 verbunden. In Fig. 5 ist zu erkennen, daß jede Verbindungsnaht 55 einen kreisförmigen Bereich 57 der Abdeckfolie 49 begrenzt, der jeweils die Öffnung 18 einer zugeordneten Mulde 11 abdeckt. Auf diese Weise ist jede Mulde 11 sozusagen mit einem eigenen Deckel in Form des kreisförmigen Bereiches 57 abgedeckt, der durch die Verbindungsnaht 55 so mit den die Mulde 11 umgebenden Stegen 29 verbunden ist, das jede Mulde 11 gegenüber der Atmosphäre und den anderen Mulden 11 gasdicht abgeschlossen ist.

Zum Anbringen der einzelnen Verbindungsnähte 55 dient bspw. ein an seiner Stirnseite 58 profilierter Schweißstempel 59, der in Fig. 6 im Ausschnitt dargestellt ist. Der Schweißstempel 59 weist einen vollzylindrischen Grundkörper 60 auf, der an seinem oberen Ende 61 einen mit dem Grundkörper 60 einstückigen ringförmigen Ansatz 62 trägt. Der ringförmige Ansatz 62 begrenzt eine kreisförmige Aussparung 63, die zu dem Grundkörper 60 und damit zu dessen Längsachse 64 konzentrisch ist, und trägt die von dem Grundkörper 60 wegweisende kranzförmige Stirnseite 58.

Auf der die Aussparung 63 kranzförmig umgebenden Stirnseite 58 ist eine Profilierung in Form von in Reihen angeordneten Pyramiden 65 vorgesehen, die an ihrer quadratischen Basis 66 einstückig mit dem ringförmigen Ansatz 62 ausgebildet sind.

Die Pyramiden 65 weisen mit ihrer Spitze 67 in eine Richtung prallel zu der Längsachse 64 des Schweißstempels 59 von dem Grundkörper 60 weg.

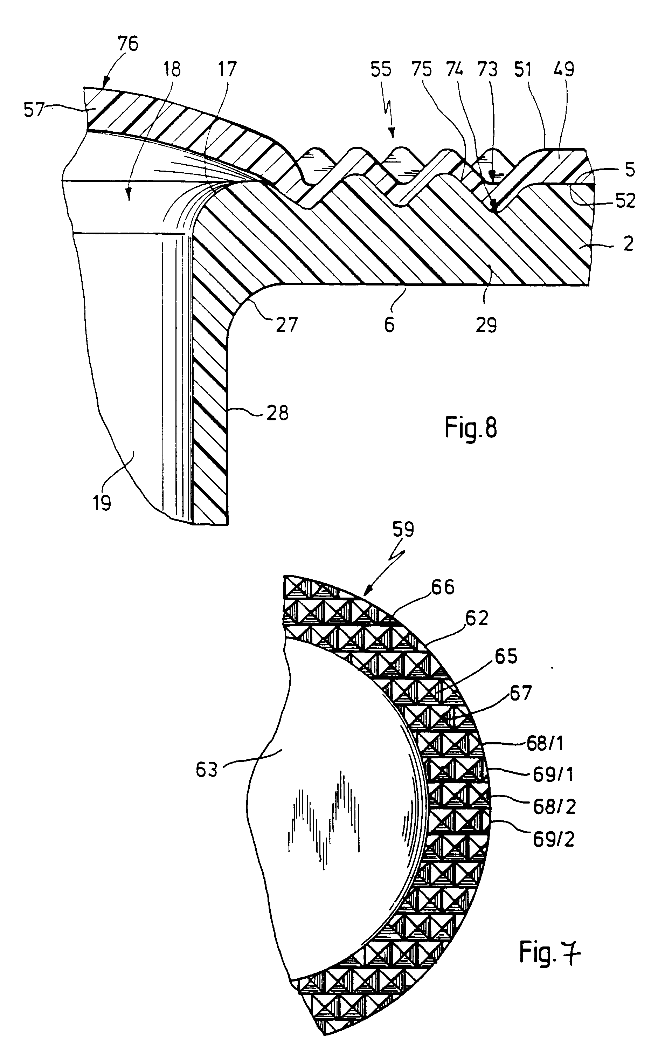

In Fig. 7 ist die Draufsicht auf die Stirnseite 58 in Richtung des Pfeiles VII aus Fig. 6 im Ausschnitt dargestellt. Wie zu erkennen ist, sind die Pyramiden 65 in Reihen 68 und 69 angeordnet, die gegeneinander um die halbe Breite der Pyramidenbasis 66 versetzt sind. Die Anordnung ist derart getroffen, daß zwischen zwei Reihen 68/1 und 68/2, die parallel zueinander verlaufen und gegeneinander nicht versetzt sind, eine Reihe 69/1 verläuft, die dementsprechend gegenüber den Reihen 68/1 und 68/2 um die halbe Breite der Pyramidenbasis 66 versetzt ist. An die Reihe 68/2 schließt sich von der Reihe 69/1 abgelegen unmittelbar eine Reihe 69/2 an, die parallel zu der Reihe 69/1 verläuft und seitlich zu dieser ausgerichtet ist.

Zurückkehrend zu Fig. 6 ist zu erkennen, daß der Schweißstempel 59 mit einer bei 71 schematisch angedeuteten Heizung versehen ist, durch die der Schweißstempel 59, der vorzugsweise aus V2A-Stahl gefertigt ist, auf ca. 280°C aufgeheizt wird. Zum Anbringen der Verbindungsnaht 55 wird der aufgeheizte Schweißstempel 59 von oben so auf die Oberseite 51 der auf die Platte 2 aufgelegten Abdeckfolie 49 gesetzt, daß er mit seiner profilierten, ringförmigen Stirnseite 58 zentrisch den Öffnungsrand 17 der unter der Abdeckfolie 49 liegenden und zu verschweißenden Mulde 11 umgibt. Die kreisförmige Aussparung 63 weist einen Durchmesser auf, der so groß ist, daß die Pyramidenspitzen 67 außerhalb des Öffnungsrandes 17 auf über den Stegen 29 befindlichen Abschnitten der Abdeckfolie 49 zu liegen kommen.

Die quadratische Basis 66 der Pyramiden 65 mißt 0,5 x 0,5 mm und die Spitze 67 der vierseitigen Pyramide 65 liegt 0,25 mm senkrecht oberhalb der Pyramidenbasis 66, d.h. zwei einander gegenüberliegende Pyramidenseiten schließen einen Scheitelwinkel von 90° ein. In radialer Richtung sind bis zu drei Pyramiden 65 hintereinander auf der ringförmigen Stirnfläche 58 angeordnet, so daß der Schweißstempel 59 insgesamt einen Außendurchmesser aufweist, der um mindestens 6 Basislängen einer Pyramide 65 größer ist als der Durchmesser der Aussparung 63.

Zum Verschweißen einer Abdeckfolie 49, deren Stärke 53 ca. 0,1 mm entspricht, mit einer Platte 2, deren Stärke 7 ca. 0,27 mm entspricht, hat sich folgendes Verfahren bewährt:

Die Abdeckfolie 49 wird von oben so auf die Platte 2 gelegt, daß sie die Mulden 11 abdeckt und daß die Durchgangslöcher 50 mit den Durchgangslöchern 9 fluchten. Der auf 280°C aufgeheizte Schweißstempel 59 wird mit seiner Stirnseite 58 zuvorderst von oben so auf die Oberseite 51 der Abdeckfolie 49 gesetzt, daß er sich zentrisch über einer unter der Abdeckfolie 49 befindlichen und zu verschweißenden Mulde 11 befindet. Die Pyramiden 65 auf der Stirnseite 58 liegen jetzt mit ihren Spitzen 67, die ggf. etwas in das Material der Abdeckfolie 49 eindringen, auf der Oberseite 51 auf und erhitzen diese. Die Abdeckfolie 49 wird auf diese Weise für ca. 13 Sekunden durch das wabenartige Profil der Stirnseite 58 vorgeheizt. Danach wird der Schweißstempel 59 um ca. 0,1 - 0,2 mm nach unten auf die Abdeckfolie 49 gedrückt, so daß jede Pyramide 67 in die Abdeckfolie 49 und diese wiederum in die Stege 29 der Platte 2 eindringt. In dieser Stellung verbleibt der Schweißstempel 59 für zwei Sekunden, dann wird er von der Abdeckfolie 49 vollständig abgehoben.

Die so entstandene Verbindungsnaht 55, die eine Art Schweißnaht ist, ist in Fig. 8 in einem Querschnitt entlang der Linie VIII-VIII aus Fig. 5 dargestellt. Die erkaltete Verbindungsnaht 55 weist eine entsprechende Profilierung auf wie der Schweißstempel 59. Die Pyramiden 65 haben in die vorgeheizte Oberseite 51 der Abdeckfolie 49 kopfstehende pyramidenartige Vertiefungen 73 eingedrückt, die von ihrer Form her den Pyramiden 65 entsprechen. Die Abdeckfolie 49 ist darüberhinaus im Bereich der Vertiefungen 73 mit ihrer Unterseite 52 in die indirekt durch die Abdeckfolie 49 hindurch vorgeheizte Oberseite 5 der Stege 29 eingedrungen und hat dort Vertiefungen 74 ausgebildet, die den Vertiefungen 73 entsprechen. Auf diese Weise hat sich zwischen der Unterseite 52 der Abdeckfolie 49 sowie der Oberseite 5 der Platte 2 eine Kontaktfläche 75 ausgebildet, die im Querschnitt zickzack-förmig verläuft. Durch diesen zickzack-förmigen Verlauf ist die Kontaktfläche 75 größer als die Auflagefläche, die vor dem Verschweißen zwischen der Unterseite 52 der Abdeckfolie 49 und der Oberseite 5 der Platte 2 im vorgesehenen Bereich der Verbindungsnaht 55 vorlag.

Durch die Hitzewirkung der Pyramiden 65 wurde nicht nur die Auflagefläche vergrößert, entlang der Kontaktfläche 75 sind die Abdeckfolie 49 und die Stege 29 außerdem miteinander stoffschlüssig verschweißt. Es hat sich gezeigt, daß diese Verbindungsnaht 55 auch bei häufigem Wechsel zwischen hohen und tiefen Temperaturen an der Unterseite 6 bzw. an der Außenseite 28 für einen guten nicht nur flüssigkeits- sondern auch gasdichten Abschluß der einzelnen Mulden 11 sorgt. Dies gilt auch dann noch, wenn sich im Inneren der Mulden ein Überdruck einstellt, weil beispielsweise die aufgenommenen Lösungen auf so hohe Temperaturen erwärmt bzw. erhitzt wurden, daß das über der Lösung befindliche Gasvolumen bestrebt ist, sich auszudehnen. Die Verbindungsnaht 55 hält auch den üblichen mechanischen Belastungen, denen die verschlossene Platte 2 im Laboralltag ausgesetzt ist, sowie den mit dem Umtemperieren verbundenen geringen Formänderungen und Spannungen problemlos stand.

Während des oben beschriebenen Verschweißens wölbt sich der die Öffnung 18 abdeckende kreisförmige Abschnitt 57 der Abdeckfolie 49 kuppelartig hoch, so daß eine verschlossene und wie oben beschrieben verschweißte Platte 2 über jeder Mulde 11 eine linsenförmige Wölbung 76 der Abdeckfolie 49 aufweist.

Da die Wölbung 76 jedoch nur bei gasdicht verschweißten Mulden 11 ausgebildet wird, ist sie zugleich eine optische Anzeige dafür, daß die ausgebildete Verbindungsnaht 55 für einen auch einem Überdruck im Inneren der Mulde standhaltenden gasdichten Abschluß der betreffenden Mulde 11 gesorgt hat. Weist die Abdeckfolie 49 nach dem Verschweißen keine Wölbungen 76 auf, so war beispielsweise der Schweißvorgang bezüglich der Verweilzeiten, der Temperatur des Schweißstempels 59 oder auch der Eindringtiefe der Pyramiden 65 in die Oberseite 51 fehlerbehaftet.

Die Temperatur des Schweißstempels 59, die Abmaße der Pyramiden 65 sowie die Eindringtiefe der Pyramiden 65 in die Oberseite 51 der Abdeckfolie 49 sind in dem aufgeführten Ausführungsbeispiel lediglich beispielhaft für eine Abdeckfolie aus Polycarbonat der Stärke 0,1 mm und eine Platte 2 aus Polycarbonat der Stärke 0,27 mm angegeben. Bei dickeren Polycarbonatfolien muß die Eindringtiefe der Pyramiden, die in etwa der Stärke der Abdeckfolie entspricht, an die neuen Stärken angepaßt werden.

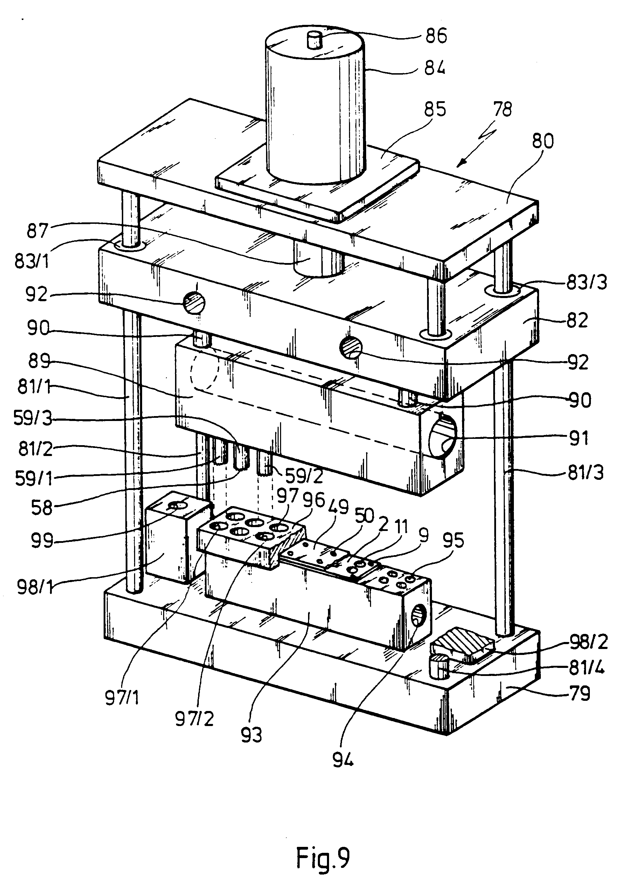

Wesentlich für den Erfolg des Schweißvorganges ist neben der korrekten Einhaltung der Verweildauer des Schweißstempels 49, zunächst auf der Oberseite 51 und dann im in die Oberseite eingedrungenen Zustand, auch die Tiefe, um die die Pyramiden 65 in das Material der Abdeckfolie 59 eindringen. Obgleich der oben beschriebene Schweißvorgang von Hand durchgeführt werden kann, wird die Ausbeute an korrekt gelegten Verbindungsnähten 55 durch die Verwendung einer in Fig. 9 dargestellten Verschweißeinrichtung 78 deutlich erhöht.

Die Verschweißeinrichtung 78 weist eine flache, rechteckige Grundplatte 79 sowie eine oberhalb der Grundplatte 79 angeordnete flache Kopfplatte 80 auf, die in etwa die gleichen Querabmaße zeigt wie die Grundplatte 79. Die Kopfplatte 80 ist mit Hilfe von vier Führungsstangen 81 auf der Grundplatte 79 befestigt. Von den vier Führungsstangen 81, die je im Bereich einer der vier Ecken von oben in die Grundplatte 79 eingeschraubt sind, ist die in Fig. 9 vordere rechte Führungsstange 81/4 aus Gründen einer übersichtlichen Darstellung herausgebrochen.

Zwischen der Grundplatte 79 und der Kopfplatte 80 ist eine höhenverstellbare Trägerplatte 82 vorgesehen, in deren äußeren Ecken Kugelbüchsen 83 eingelassen sind, durch die die Führungsstangen 81 hindurchgehen. Als Antrieb für die Höhenverstellung der Trägerplatte 82 ist ein elektrisch betriebener Antriebsmotor 84 von der Trägerplatte 82 abgelegen mit seinem Flansch 85 von oben auf der Kopfplatte 80 befestigt. Der Motor 84 weist eine bei 86 angedeutete Motorwelle auf, die mit einem bei 87 angedeuteten Kugelumlaufspindeltrieb verbunden ist. Der Kugelumlaufspindeltrieb 87 ist andererseits mit der Trägerplatte 82 verbunden und dient zur Umsetzung der Drehbewegung der Motorwelle 86 in die Verstellbewegung der Trägerplatte 82 längs der Führungsstangen 81.

Von dem Kugelumlaufspindeltrieb 87 abgelegen ist mittig unterhalb der Trägerplatte 82 ein Heizblock 89 vorgesehen, der über vier Abstandsbolzen 90 von unten an der Trägerplatte 82 befestigt ist. Der aus Kupfer gefertigte Heizblock 89 erfüllt die Funktion der in Fig. 6 bei 71 angedeuteten Heizung für die Schweißstempel 59, von denen in Fig. 9 drei angedeutet sind. Die Schweißstempel 59/1, 59/2 und 59/3 stecken von den Abstandsbolzen 90 abgelegen von unten in dem Heizblock 89 und zeigen mit ihren Stirnseiten 58 von dem Heizblock 89 wegweisend nach unten.

In dem Heizblock 89 ist ein ihn in Fig. 9 von rechts nach links fast vollständig durchsetzendes Sackloch 91 vorgesehen, in das eine elektrisch beheizbare Heizpatrone gesteckt ist, die aus Gründen der Übersichtlichkeit nicht weiter dargestellt ist. Die Temperatur des Heizblockes 89 wird in geeigneter Weise von einem nicht weiter gezeigten Temperaturfühler gemessen und an eine ebenfalls nicht dargestellte Regelschaltung gegeben, die ihrerseits die Heizpatrone ansteuert. In an sich bekannter Weise wird so ein geschlossener Regelkreis gebildet, über den die Temperatur des Heizblockes 89 auf einem konstanten Wert, bspw. 280 °C, gehalten wird. Über die Abstandsbolzen 90 erwärmt der Heizblock 89 die Trägerplatte 82, was zu einem Verklemmen der Kugelbuchsen 83 auf den Führungsstangen 81 führen kann. Aus diesem Grund sind in der Trägerplatte 82 Kühlmittelbohrungen 92 vorgesehen, über die die Trägerplatte 82 an einen Thermostatkühlkreislauf angeschlossen ist. Auf diese Weise ist die Temperatur der Trägerplatte 82 unabhängig von der Temperatur des Heizblockes 89 über einen externen Thermostaten regelbar, so daß eine leichtgängige Verstellung der Trägerplatte 82 längs der Führungsstangen 81 gewährleistet ist.

Etwa mittig unter dem über die Trägerplatte 82 höhenverstellbaren Heizblock 89 ist auf der Grundplatte 79 ein nach oben weisender Aufnahmeblock 93 vorgesehen. Der Aufnahmeblock 93 weist eine ihn durchsetzende Kühlmittelbohrung 94 auf, die in gleicher Weise wie die Kühlmittelbohrung 92 der Trägerplatte 82 an einen externen Thermostatkreislauf angeschlossen ist, der den Aufnahmeblock 93 auf einer konstanten und einstellbaren Temperatur hält.

Der Aufnahmeblock 93 weist nach oben offene Näpfe 95 auf, die zur Aufnahme der nach unten über die Platte 2 vorstehenden Ausstülpungen 21 ausgelegt sind. Die Näpfe 95 haben daher dieselben Abmaße wie die in Fig. 3 zu erkennenden Sacklöcher 38 in dem Formblock 37 und sind wie die Mulden 11 in Reihen 12 und Spalten 13 angeordnet.

Von oben ist auf den Aufnahmeblock 93 eine Platte 2 aufgelegt, die wiederum von einer Abdeckfolie 49 abgedeckt ist. Über die Abdeckfolie 49 ist eine den Aufnahmeblock 93 allseits von oben übergreifende Lochmaske 96 gestülpt, die die Abdeckfolie 49 auf die Platte 2 und diese wiederum mit ihren Mulden 11 in den Aufnahmeblock 93 drückt. In der Lochmaske 96 sind auf die Schweißstempel 59 ausgerichtete durchgehende Löcher 97 vorgesehen, die ebenfalls derart in Reihen 12 und Spalten 13 angeordnet sind, daß über jeder Mulde 11 zentrisch ein Loch 97 ausgerichtet ist. Aus Gründen der Übersichtlichkeit sind die Lochmaske 96, die Abdeckfolie 49 sowie die Platte 2 gegenüber dem Aufnahmeblock 93 versetzt abgebrochen dargestellt.

Selbstverständlich ist für jede Mulde 11 der Platte 2 ein Loch 97 und ein Schweißstempel 59 vorgesehen.

Beidseits des Aufnahmeblockes 93 sind zur Befestigung der Lochmaske 96 auf der Grundplatte 79 zwei identische nach oben weisende Sockel 98 angeordnet, von denen der rechte Sockel 98/2 abgebrochen dargestellt ist. Der Sockel 98/1 weist eine nach oben zeigende Befestigungsbohrung 99 auf, an der eine Befestigungsklammer, die beispielsweise als Federklammer oder als Riegel ausgelegt sein kann, befestigt wird, um die Lochmaske 96 nach unten auf den Aufnahmeblock 93 zu drükken.

Aus Gründen der Übersichtlichkeit ist die Befestigungsklammer in Fig. 9 weggelassen.

Die insoweit beschriebene Verschweißeinrichtung 78 arbeitet wie folgt:

Die Trägerplatte 82 befindet sich in der in Fig. 9 gezeigten hochgefahrenen Ausgangsposition. Nachdem die Lochmaske 96 von dem Aufnahmeblock 93 entfernt wurde, wird eine zu verschweißende Platte 2 von oben so auf den Aufnahmeblock 93 gelegt, daß die Mulden 11 mit ihren Ausstülpungen 21 in den Näpfen 95 zu liegen kommen. Die mit ihrer Öffnung 18 nach oben weisenden Mulden 11 sind bereits mit den gewünschten Substanzen gefüllt und von einer Abdeckfolie 49 bedeckt, oder werden jetzt entsprechend gefüllt und dann mit einer Abdeckfolie 49 abgedeckt, die so ausgerichtet ist, daß ihre Durchgangslöcher 50 mit den Durchgangslöchern 9 in der Platte 2 fluchten. Über die so abgedeckte Platte 2 wird die Lochmaske 96 gestülpt, wobei ihre durchgehenden Löcher 97 zentrisch über den Mulden 11 zu liegen kommen. Mit Hilfe der an den Sockeln 98 vorgesehenen Befestigungsklammern wird die Lochmaske 96 fest nach unten auf den Aufnahmeblock 93 gedrückt.

Der Heizblock 89 ist über die in dem Sackloch 91 steckende Heizpatrone auf 280°C aufgeheizt. Diese Temperatur weisen auch die mit dem Heizblock 89 thermisch leitend verbundenen Schweißstempel 59 auf. Über den Kugelumlaufspindeltrieb 87 wird die Rotationsbewegung der Motorwelle 86 des Antriebsmotors 84 in eine über die Kugelbüchsen 83 und die Führungsstangen 81 geführte abwärts gerichtete Bewegung der Trägerplatte 82 umgesetzt. Beim Heruntergehen der Trägerplatte 82 und damit des Heizblockes 89 schieben sich die Schweißstempel 59/1 bzw. 59/2 von oben in die zugeordneten Löcher 97/1 bzw. 97/2 der Lochmaske 96. Die Übersetzung des Kugelumlaufspindeltriebes 87 und die Anzahl der Umdrehungen der Motorwelle 86 sind so bemessen, daß am Ende der Abwärtsbewegung der Trägerplatte 82 die Schweißstempel 59 mit ihrer Stirnseite 58 bzw. den Spitzen 67 der Pyramiden 65 gerade auf der Oberseite 51 der Abdeckfolie 49 zu liegen kommen, wie dies oben bereits beschrieben wurde.

In dieser Stellung, in der die Schweißstempel 59 die Abdeckfolie 49 und die Platte 2 im Bereich der anzulegenden Verbindungsnähte 55 vorheizen, verharrt die Verschweißeinrichtung 78 für ca. 13 Sekunden. Nach dieser Vorwärmzeit wird die Trägerplatte 82 über den Kugelumlaufspindeltrieb 87 von dem Motor 84 allmählich um 0,1 mm weiter nach unten auf den Aufnahmeblock 93 zubewegt, so daß die Pyramiden 65 auf der Stirnseite 58 der Schweißstempel 59 in die Abdeckfolie 49 und diese in die Stege 29 der Trägerplatte 2 eindringen. Nach weiteren zwei Sekunden wird der Motor 84 so angesteuert, daß sich seine Motorwelle 86 in zur vorherigen Drehrichtung entgegengesetzten Richtung dreht und damit über den Kugelumlaufspindeltrieb 87 die Trägerplatte 82 und damit den Heizblock 89 und die Schweißstempel 59 wieder in die in Fig. 9 gezeigte Ausgangsposition hochfährt.

Nach dem Lösen der Befestigungsklammern kann die Lochmaske 96 abgenommen werden und die wie in Fig. 5 dargestellte verschweißte Platte 2 wird von dem Aufnahmeblock 93 abgenommen.

Jetzt wird die nächste Platte 2 auf den Aufnahmeblock 93 gelegt und der Schweißvorgang beginnt von vorne.

Für viele Versuche ist es erforderlich, die in den Mulden 11 aufgenommenen Substanzen bei niedrigen Temperaturen zu halten und zu verhindern, daß sie während des soeben beschriebenen Schweißvorganges aufgeheizt werden. Zu diesem Zweck wird der Aufnahmeblock 93 und damit seine Näpfe 95 über die Kühlmittelbohrung 94 auf eine Temperatur thermostatiert, wie sie die jeweiligen Substanzen erfordern, bspw. auf 10°C. Die Mulden 11 liegen mit ihrer Wärmeaustauschfläche 28' eng an der Innenwand des jeweiligen Napfes 95 an, so daß wegen der geringen Stärke 31 der Wandung 20 der Mulden 11 die in den Mulden 11 befindlichen Substanzen auf derselben Temperatur gehalten werden wie der Aufnahmeblock 93 selbst. Die den Substanzen beim Verschweißen evtl. zugeführte Wärme wird wegen des guten Wärmeüberganges augenblicklich durch die Wandung 20 hindurch in den Aufnahmeblock 93 abgeführt.

Auf diese Weise können in den Mulden 11 der neuen Platte 2 mit Hilfe der neuen Verschweißeinrichtung 78 auch Substanzen eingeschweißt werden, die sehr empfindlich auf Temperaturschwankungen reagieren. Hierdurch ist es in bisher nicht gekanntem Maße möglich, temperatursensitive Substanzen oder Lösungen bzw. hochinfektiöse Substanzen in großer Zahl auf kleinstem Raum gasdicht zu verpacken. Die Substanzen können bspw. vorbereitete Reaktionslösungen für biochemische und/oder mikrobiologische Testverfahren sein, die dem Anwender bereits in portionierter und verschweißter Form in den neuen Platten 2 geliefert werden.

Die von dem Anwender zu untersuchenden Substanzen können bspw. in die in den Mulden 11 befindlichen Testlösungen eingebracht werden, indem die die Öffnungen 18 der Mulden 11 abdeckenden Wölbungen 76 von oben mit einer dünnen Kanüle durchstochen werden. Die zu untersuchenden Substanzen werden dann in die in den Mulden 11 befindlichen Testlösungen eingespritzt.

Nach dem Zurückziehen der Kanüle, die bspw. eine im Laboralltag üblicherweise verwendete Spritze ist, verbleibt in der Wölbung 76 ein kapillarartiger Kanal. Über diesen Kanal ist kein Feuchtigkeitsaustausch mit der umgebenden Atmosphäre möglich, so daß sich das Volumen der in den gasdicht verschweißten Mulden 11 aufgenommenen Substanzen oder Lösungen durch Kondensations- oder Verdunstungseffekte nicht verändert.

Üblicherweise werden die Mulden 11 der neuen Platte 2 jedoch vor Ort, bspw. im Chemielabor, gefüllt und unter Verwendung der neuen Verschweißeinrichtung mit einer Abdeckfolie 49 gasdicht verschlossen. Das feste Rastermaß der Spalten 13 und Reihen 12 ermöglicht es dabei, mehrere Mulden 11 gleichzeitig mit einer an sich bekannten Mehrfachpipette zu füllen.

In Fig. 10 ist eine Platte 2 mit gasdicht verschlossenen Mulden 11 gezeigt, in denen sich bspw. Lösungen befinden, deren Reaktionsverlauf über ihre Temperatur beeinflußbar ist. Die Lösungen sind entweder vor Ort in die Mulden 11 eingefüllt worden oder befanden sich bereits in der verschweißt gelieferten Platte 2 und wurden nachträglich vom Anwender mit den zu untersuchenden Substanzen - bspw. zu untersuchenden DNA-Molekülen - angeimpft.

Die so vorbereitete Platte 2 wird von oben in einen Thermoblock 101 eingesetzt, der nach oben offene Sacklöcher 102 aufweist, die zur Aufnahme der becherartigen Ausstülpungen 21 dienen. Die Sacklöcher 102 haben dieselbe Form wie die Sacklöcher 38 in dem zur Herstellung der Platte 2 verwendeten Formblock 37. Nach dem Einsetzen der Ausstülpungen 21 in die Sacklöcher 102 liegen diese mit ihrer Innenwand 103 unmittelbar an der Wärmeübergangsfläche 28' der Ausstülpungen 21 an. Zwischen der Außenseite 28 und der als Gegenfläche 103' wirkenden Innenwand 103 befinden sich deshalb keine den Wärmeübergang zwischen dem Thermoblock 101 und dem Inneren 19 der Mulden 11 störende Luftschichten.

In dem Thermoblock sind weiterhin nach oben offene Gewindebohrungen 104 vorgesehen, die bei in den Thermoblock 101 eingesetzter Platte 2 mit den Durchgangslöchern 50 bzw. 9 in der Abdeckfolie 49 bzw. in der Platte 2 fluchten. Durch die Durchgangslöcher 50 und 9 hindurch werden von oben Schrauben 105 in die Gewindebohrungen 104 eingeschraubt und damit die mit der Abdeckfolie 49 verschlossene Platte 2 fest mit dem Thermoblock 101 verbunden. Der Thermoblock 101 kommt mit seiner Oberseite 106 dicht an der Unterseite 6 der Platte 2 zu liegen, und die Ausstülpungen 21 werden mit ihrer Wärmeaustauschfläche 28' fest auf die Innenwand 103 der Sacklöcher 102 gedrückt.

Wegen der glatten Oberfläche der Außenseite 28, die in unmittelbarem thermischen Kontakt mit der Innenwand 103 steht, und wegen des beschriebenen großen Wärmedurchtrittswertes nehmen die in den Mulden 11 befindlichen Lösungen innerhalb weniger Sekunden die Temperatur des Thermoblocks 101 an. Sollen die Lösungen bspw. für eine längere Zeit bei einer tiefen Temperatur gelagert werden, wird der Thermoblock 101, der aus einem gut wärmeleitenden Metall gefertigt ist, über einen an ihn angeschlossenen Thermostaten z.B. auf +4°C temperiert.

Wenn die Reaktion in den Lösungen gestartet werden soll, wird der Thermoblock 101 in geeigneter Weise auf die Reaktionstemperatur der Lösungen aufgeheizt, die wegen des guten Wärmeüberganges nahezu unmittelbar der Temperaturänderung des Thermoblocks 101 folgen. Die Temperaturänderung des Thermoblocks 101 selbst kann in an sich bekannter Weise dadurch bewirkt werden, daß der Thermoblock 101 in Wasserbäder verschiedener Temperatur eingetaucht wird, in wärmeleitenden Kontakt mit vortemperierten weiteren Metallblöcken gebracht wird oder längs einer Metallschiene bewegt wird, auf der ein Temperaturgradient etabliert ist.

Insbesondere die Metallschiene mit dem Temperaturgradienten ermöglicht das zyklische Verändern der Temperatur des Thermoblockes 101 und damit der Temperatur der Lösungen in den Mulden 11. Zum Durchführen der Polymerase-Kettenreaktion in den Mulden 11 wird der Thermoblock 101 bspw. zunächst für 60 Sekunden auf 37°C, dann für 120 Sekunden auf 72°C, danach für 60 Sekunden auf 94°C und dann wieder für 60 Sekunden auf 37°C gehalten u.s.w.. Wegen des auch bei Überdruck gasdichten Abschlusses der einzelnen Mulden entweicht auch bei den hohen Temperaturen keine dann wasserdampfgesättigte Luft aus dem Inneren der Mulden. Der Wasserdampfgehalt des über der aufgenommenen Flüssigkeit befindlichen Luftvolumens wird zwar durch die Flüssigkeit geregelt, da jedoch keine Luft entweichen kann, kommt es nicht zu Verdunstungsvorgängen, so daß sich die anfänglich eingestellten Konzentrationen in den Lösungen im Verlauf der vielen Temperaturzyklen nicht verändern. Dies sorgt für eine gute Ausbeute bei den Experimenten.

Entscheidend für den Verlauf der Polymerase-Kettenreaktion ist die Zeit, die benötigt wird, um die Lösungen auf die einzelnen Temperaturen zu bringen. Während ein typischer Reaktionsablauf in den bekannten Plastik-Reaktionsgefäßen mehr als 10 Stunden dauert und üblicherweise übernacht durchgeführt wird, ist die Reaktion bei Verwendung der neuen Platte 2 in weniger als 4 Stunden beendet. Ein solcher Versuch kann daher jetzt innerhalb eines Tages vorbereitet, durchgeführt und analysiert werden.

Nach Beendigung des Versuchsablaufes werden die Lösungen zumindest teilweise weiterverwendet, bspw. um sie über ein Trenngel zu analysieren. Zu diesem Zweck wird die Wölbung 76 mit der in Fig. 10 bei 107 angedeuteten Spritze durchstochen und ein Teil der Lösung entnommen. Nach dem Zurückziehen der Spritze 107 kann die in der Mulde 11 verbleibende Lösung bspw. in der oben beschriebenen Weise gelagert werden. Obwohl das bei der Entnahme in der Wölbung 76 entstandene Loch keinen nennenswerten Feuchtigkeitsaustausch zu Folge hat, läßt es sich bespw. mit einer Adhäsionsfolie nachträglich wieder verschließen.

Abschließend sei lediglich der Vollständigkeit halber erwähnt, daß die Querabmaße der neuen Platte 2 sowie die Reihen- und Spaltenabstände 14 bzw. 15 im wesentlichen von dem jeweils gewünschten Füllvolumen 33 der Mulden 11 abhängt. An diese Abstände sind die jeweils verwendeten Thermoblöcke 101, Aufnahmeblöcke 93 sowie Formblöcke 37 angepaßt. In jedem Fall ist jedoch die Stärke 7 der Folie 36 so gewählt, daß die Mulden 11 in der fertigen Platte 2 eine Bodenwand 24 aufweisen, deren Stärke 31 im Bereich von 0,04 mm liegt, so daß der Wärmedurchtrittswert den erforderlichen hohen Wert aufweist.

**Patentansprüche**

1. Verfahren zur Herstellung einer Platte (2) mit zumindest einer nach oben offenen Mulde (11) zur Aufnahme von chemischen und/oder bio-chemischen und/oder mikrobiologischen Sub-stanzen, bei dem die Mulden (11) mit einem Formwerkzeug in die Platte (2) eingebracht werden, mit den Schritten:
   a) Auflegen einer thermisch verformbaren Kunststoffolie (36) auf einen als Formwerkzeug dienenden Formblock (37), der die Negativform der zu bildenden Mulden aufweist; und
   b) Beaufschlagen der Kunststoffolie mit einem heißen Medienstrom (47), der eine festgelegte erste Temperatur aufweist, wobei der heiße Medienstrom (47) zumindest auf einen eine Vertiefung (38) abdeckenden Bereich der Kunststoffolie (36) trifft und diesen erweicht,
   dadurch gekennzeichnet, daß als Medienstrom ein Gasstrom (47) verwendet wird, mit dem die Kunststoffolie (36) für eine festgelegte Zeitspanne beaufschlagt wird, wobei der Gasstrom (47) den der Vertiefung (38) zugeordneten Bereich der Kunststoffolie (36) erweicht und zusätzlich so in die Vertiefung (38) hineindrückt, daß er sich vollflächig an deren durchgehend glatte Innenwand (40) anschmiegt.

2. Verfahren nach Anspruch 1, dadurch gekennzeichnet, daß der Formblock (37) auf einer festgelegten zweiten Temperatur gehalten wird, die unterhalb der festgelegten ersten Temperatur aber oberhalb der Raumtemperatur liegt.

3. Verfahren nach einem der vorhergehenden Ansprüche, dadurch gekennzeichnet, daß der heiße Gasstrom (47) von einer Düse (45) abgegeben wird, deren Austrittsöffnung (48) während der festgelegten Zeitdauer in einem festgelegten Abstand zu der Kunststoffolie (36) gehalten wird.

4. Verfahren nach den Ansprüchen 1 und 3, dadurch gekennzeichnet, daß die im Querschnitt runde Mulde (11) ein Volumen kleiner als 200 mm$^3$ und einen Durchmesser (16) kleiner als 10 mm aufweist, daß die Austrittsöffnung (48) der Düse (45) einen Durchmesser aufweist, der ca. genauso groß ist wie der Durchmesser (16) der Mulde (11), und daß der festgelegte Abstand etwa dem Durchmesser (16) der Mulde (11) entspricht.

5. Verfahren nach Anspruch 4, dadurch gekennzeichnet, daß die Kunststoffolie (36) eine Polycarbonatfolie mit einer Stärke (7) geringer als 0,5 mm ist, daß die festgelegte erste Temperatur zwischen 250°C und 300°C und die festgelegte zweite Temperatur zwischen 90°C und 110°C liegt.

**Claims**

1. Process for producing a plate comprising at least one well (11) having its opening facing upwards, for receiving chemical and/or biochemical and/or microbiological substances, said wells (11) being made in the plate (2) with the aid of a molding die, comprising the steps of:
   a) applying a plastic film (36), which is deformable by the action of heat, on a molding block (37) which serves as said molding die and which has the negative shape of the wells to be formed; and
   b) subjecting said plastic film (36) to the action of a hot medium flow (47) having a predetermined first temperature, the hot medium flow (47) impinging upon at least an area of said plastic film (36) covering a recessed portion (38), and softening this area,
   characterizd in that as said medium flow a gas flow (47) is used, said plastic film (36) being subjected to said gas flow for a predetermined period of time, said gas flow (47) softening said area of said plastic film (36) associated to said recessed portion (38), and additionally pressing it into said recessed portion (38) so that it comes to lie flat all-over the latters inner wall (40) which is smoothed throughout.

2. The process of claim 1, characterized in that said molding block (37) is maintained at a predetermined second temperature which is lower than said predetermined first temperature, but above room temperature.

3. The process of any of the proceeding claims, characterized in that said hot gas flow (47) issues from a nozzle (45) whose orifice (48) is maintained at a fixed distance from said plastic film (36) during said fixed period of time.

4. The process of claims 1 and 3, characterized in that said well (11), which displays a circular cross-section, has a volume smaller than 200 m³ and a diameter (10) smaller than 10 mm, said orifice (48) of said nozzle (45) has a diameter approximately equal to the diameter (16) of said well (11) and said fixed distance corresponds approximately to said diameter (16) of said well.

5. The process according to claim 4, characterized in that said plastic film (36) is a polycarbonate film having a thickness (7) smaller than 0.5 mm, said predetermined first temperature is between 250°C and 300°C, and said predetermined second temperature is between 90°C and 110°C.

**Revendications**

1. Procédé de fabrication d'une plaque (2) présentant au moins une alvéole (11) ouverte vers le haut destinée à recevoir des substances chimiques et/ou biochimiques et/ou microbiologiques, dans laquelle les alvéoles (11) sont pratiquées dans la plaque (2) avec un outil de formage, comportant les étapes suivantes :

   a) application d'une feuille de matière plastique (36) thermiquement déformable sur un bloc de formage (37), servant d'outil de formage, qui présente la forme négative des alvéoles à former ; et

   b) envoi sur la feuille plastique d'un courant de fluide (47) chaud, qui présente une première température définie, le courant de fluide (47) chaud parvenant au moins sur une zone, recouvrant un creux (38), de la feuille plastique (36) et ramollissant celle-ci.

   caractérisé en ce qu'on utilise comme courant de fluide un courant de gaz (47) que l'on envoie sur la feuille de matière plastique (36) pendant un intervalle de temps défini, le courant de gaz (47) ramollissant la zone de la feuille de matière plastique (36), associée au creux (38), et pénétrant en plus dans le creux (38) de manière que celui-ci épouse complètement sa paroi intérieure (40) lisse continue.

2. Procédé selon la revendication 1, caractérisé en ce que le formage (37) est maintenu à une deuxième température définie, qui se situe au-dessous de la première température définie mais au-dessus de la température ambiante.

3. Procédé selon l'une des revendications précédentes, caractérisé en ce que le courant de gaz (47) chaud est délivré par un buse (45) dont l'orifice de sortie (48) est maintenu pendant l'intervalle de temps défini à une distance définie de la feuille de matière plastique (36).

4. Procédé selon les revendications 1 et 3, caractérisé en ce que l'alvéole (11), de section transversale ronde, a un volume inférieur à 200 mm³ et un diamètre (16) inférieur à 10 mm, en ce que l'orifice de sortie (48) de la buse (45) présente un diamètre qui est exactement égal au diamètre (16) de l'alvéole (11), et en ce que la distance fixée correspond à peu près au diamètre (16) de l'alvéole (11).

5. Procédé selon la revendication 4, caractérisé en ce que la feuille de matière plastique (36) est une feuille de polycarbonate d'une épaisseur (7) inférieure à 0,5 mm, en ce que la première température fixée est comprise entre 250 °C et 300 °C et la seconde température fixée est comprise entre 90 °C et 110 °C.

Fig.1

Fig.2

Fig.3

Fig.4

Fig.5

Fig.6

Fig.8

Fig.7

Fig.9

Fig.10